## Europäisches Patentamt
## European Patent Office
## Office européen des brevets

(11) Numéro de publication: **0 125 185**
**A1**

## (12) DEMANDE DE BREVET EUROPEEN

(21) Numéro de dépôt: **84400919.1**

(22) Date de dépôt: **04.05.84**

(51) Int. Cl.³: **B 60 N 1/00**

(30) Priorité: **05.05.83 FR 8307493**

(43) Date de publication de la demande:
**14.11.84 Bulletin 84/46**

(84) Etats contractants désignés:
**BE DE GB IT NL SE**

(71) Demandeur: **SABLé**
**47 rue du Pré-st.-Gervais**
**F-93500 Pantin(FR)**

(72) Inventeur: **Sanchez, Michel**
**12, rue Exelmans**
**F-78140 Velizy(FR)**

(74) Mandataire: **Coutel, Jean-Claude**
**Cabinet AYMARD & COUTEL 20, rue Vignon**
**F-75009 Paris(FR)**

(54) Dispositif de suspension pneumatique, notamment pour siège de véhicule, avec adaptation à la charge appliquée.

(57) Le dispositif de suspension pneumatique avec adaptation à la charge, comporte: une chambre pneumatique (19) disposée entre le châssis fixe (1) et le châssis mobile (2), un distributeur (22) agissant sélectivement pour faire admettre du gaz sous pression dans la chambre ou mettre celle-ci à l'atmosphère, un levier oscillant (40) commandant le distributeur dans un sens ou dans l'autre ou le laissant au repos, et un organe (44) solidaire du châssis mobile (2) et commandant la position du levier (40), à travers une bielle (46), une course morte ou neutre étant prévue pour le châssis (2) de sorte qu'il ne commande le distributeur qu'au delà d'une zone d'équilibre.

*Fig:1*

EP 0 125 185 A1

Croydon Printing Company Ltd.

0125185

1.

" Dispositif de suspension pneumatique, notamment pour siège de véhicule, avec adaptation à la charge appliquée "-

L'invention est relative à un dispositif de suspension pneumatique avec adaptation à la charge appliquée.
Ces dispositifs comportent une enceinte ou chambre pneumatique disposée entre un châssis fixe et un châssis mobile, ce dernier recevant la charge appliquée et la
transmettant au châssis fixe à travers la suspension pneumatique, avec ou sans rapport de multiplication ou de dé -
multiplication.

La difficulté rencontrée avec ce genre de suspensions,qui donnent par ailleurs toute satisfaction, réside
dans·leur adaptation à la force appliquée à la charge.

Dans le cas d'une charge exerçant une force constante, il suffit d'admettre une fois pour toutes dans la
chambre pneumatique un volume d'air déterminé en fonction
de ses caractéristiques géométriques, de la charge et des
caractéristiques dynamiques et statiques du mode de suspension désiré.

Par contre, dans le cas d'une charge exerçant une
force qui peut varier dans le temps, il est clair que, toutes choses égales par ailleurs, la chambre pneumatique établie comme ci-dessus fournira des modes de suspension variables, ce qui peut être gênant, surtout en fonctionnement
dynamique où l'on risque de rencontrer les phénomènes de
fréquence propre et de résonnance. Dans le cas d'une suspension pour siège de véhicule, les caractéristiques dynamiques de la suspension dépendront du poids du conducteur.

L'invention a pour but de résoudre ce problème en fournissant un dispositif de suspension pneumatique de ce genre qui s'adapte de lui-même à la charge appliquée , quant à la force de celle-ci.

Un autre but de l'invention est de fournir un dispositif de suspension du genre indiqué dans lequel, en fonctionnement dynamique, un faible déplacement transitoire normal du châssis mobile est sans effet sur la chambre pneumatique.

L'invention s'applique en particulier, mais non exclusivement, à la suspension de sièges pour véhicules, notamment camions, tracteurs routiers et agricoles, engins de travaux publics ou agricoles, la force exercée par la charge étant constituée essentiellement par le poids du conducteur, ce poids pouvant varier largement d'un individu à l'autre.

Le dispositif de suspension pneumatique selon l'invention, comportant un châssis fixe, un châssis mobile recevant la charge appliquée, et une chambre pneumatique interposée directement ou indirectement entre les deux châssis et destinée à transmettre élastiquement au châssis fixe la force exercée par la charge, est caractérisé par le fait qu'il comporte en outre:

- une source de fluide pneumatique sous pression, notamment de l'air comprimé;
- des moyens distributeurs propres, d'une part, à mettre la chambre en communication pneumatique sélectivement avec la source de fluide sous pression ou avec l'admosphère et, d'autre part, à fermer la chambre;
- un levier basculant articulé sur lesdits moyens distributeurs et propres à commander ceux-ci sans jeu pour mettre sélectivement la chambre dans l'un des trois états fermé ou en communication avec la source ou l'atmosphère;
- une bielle articulée sur le châssis mobile coopérant avec le levier basculant à distance de l'articulation de celui-ci sur les moyens distributeurs, la coopération de la bielle et du levier étant bilatérale et avec une course morte ou neutre permettant à la bielle une légère course par rapport au levier basculant sans actionner celui-ci;

- et des moyens élastiques de rappel sollicitant la bielle à venir en alignement avec l'articulation du levier basculant agissant sur les moyens distributeurs.

Selon un mode de réalisation préféré, la bielle et le levier basculant coopèrent par un système à broche et boutonnière permettant une légère course morte ou neutre de la broche par rapport à la boutonnière.

On comprendra bien l'invention à la lecture de la description qui va suivre et en référence aux dessins annexés dans lesquels :

Fig 1 est une vue schématique partielle, en élévation latérale, du dispositif de suspension selon l'invention dans son application aux sièges de véhicules et pour la position statique de la suspension en charge;

Fig 2 est une vue analogue à la fig 1 montrant le dispositif de suspension à vide; et

Fig 3 est ,à plus grande échelle et en coupe, une vue montrant une partie du dispositif des fig 1 et 2 et le détail du distributeur.

L'invention sera décrite ci-après dans son application préférée, mais non limitative, à la suspension d'un siège de véhicule.

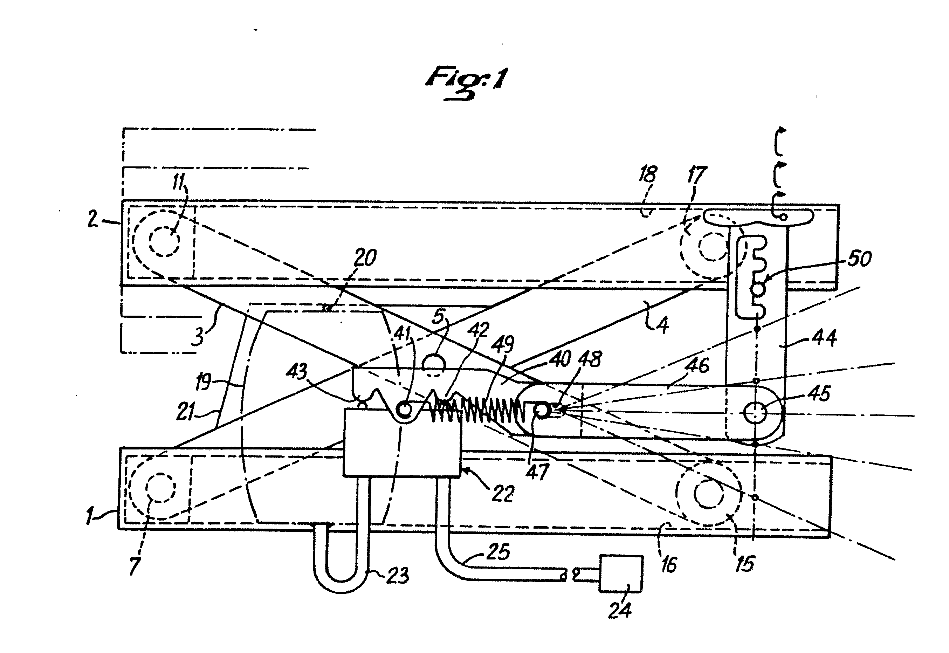

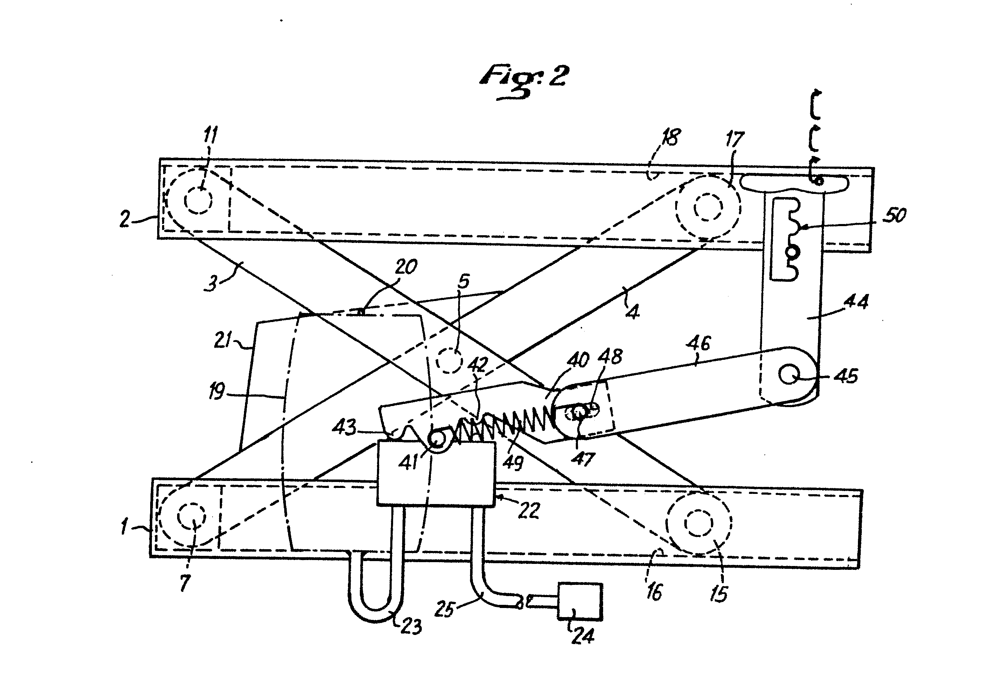

Le dispositif de suspension élastique de siège de véhicule représenté sur les fig 1 et 2 comporte essentiellement un châssis inférieur fixe 1 à fixer sur le bâti du véhicule, un châssis supérieur 2 destiné à recevoir . . siège (non représenté), et des moyens de guidage des déplacements verticaux du châssis supérieur par rapport au châssis inférieur, ces moyens étant constitués, dans l'exemple, par deux paires de leviers en ciseaux 3, 4 articulés l'un sur l'autre par paires par deux pivots coaxiaux 5. Sur les dessins, une seule paire de leviers 3, 4 et un seul pivot 5 sont visibles. Les extrémités inférieures des leviers 4 sont montées à pivotement sur un axe horizontal transversal 7 supporté, à ses deux extrémités, par le châssis inférieur 1. D'une manière analogue, les extrémités supérieures des deux autres leviers 3 sont montés à pivotement sur un axe horizontal 11 supporté à ses deux extrémités, par le châssis supérieur 2. Les extrémités inférieures des deux leviers 3, portent des galets 15 qui roulent dans deux glissières longitudinales 16, présentant des sections en forme de " U " couché se faisant face. D'une manière analogue, les extrémités supérieures des deux leviers 4 portent des galets 17, qui roulent respectivement dans deux glissières analogues 18 solidaires du châssis supérieur 2.

Le châssis supérieur 2 peut ainsi, de façon connue, se déplacer verticalement, parallèlement à lui-même, entre deux positions extrêmes définies par des butées ( non représentées ).

Il est sollicité vers le haut par des moyens de suspension pneumatique représentés schématiquement en 19 et constitués par une chambre gonflable de volume variable, dont la partie inférieure est assujettie au châssis fixe et dont la partie supérieure est assujettie en un point 20 à une traverse 21 reliant les deux leviers 4. La chambre 19 est susceptible de se déformer verticalement, à la manière d'un soufflet.

La chambre 19, quant à la quantité d'air qu'elle contient, est commandée par un distributeur 22 auquel elle est reliée à sa partie inférieure par une conduite 23.Le distributeur 22 est agencé pour pouvoir mettre la canalisation 23 en communication soit avec une source d'air comprimé 24, reliée au distributeur par une conduite 25, soit avec l'atmosphère, mais il peut aussi interrompre toute communication dans la chambre pour qu'elle constitue une enceinte fermée.

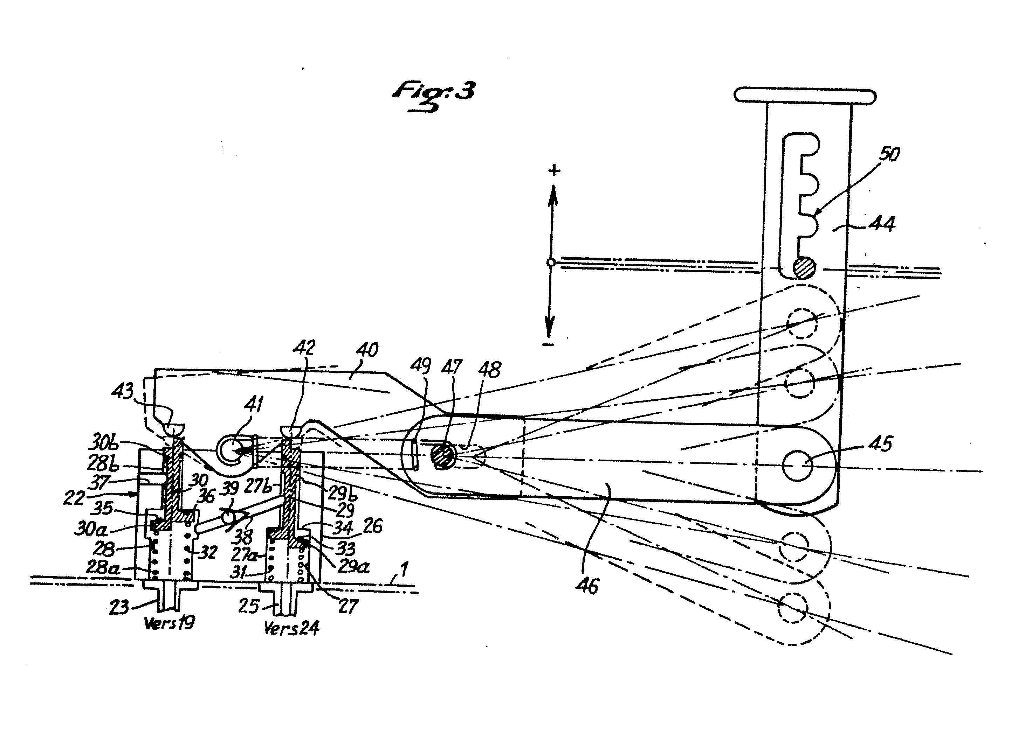

On décrira maintenant la structure du distributeur 22, spécialement en référence à la fig 3. Il comporte un boîtier 26 fixé au châssis fixe 1 et présentant deux alésages verticaux étagés 27, 28. Dans chaque alésage évolue un piston ou plongeur 29, 30 sollicité par un ressort 31, 32 vers la position fermée.

La conduite 25 provenant de la source en fluide sous pression 24 débouche dans la partie 27a de plus grand diamètre de l'alésage 27. Cette chambre 27a contient le ressort 31 et la tête élargie 29a du plongeur 29. La tête 29a a un diamètre inférieur à celui de la chambre 27a, de sorte que le fluide peut circuler dans la zone annulaire définie par la tête et la paroi de la chambre. La face de la tête 29a opposée à celle qui reçoit le ressort 31 est garnie d'un joint annulaire 33 propre à venir coopérer avec l'épaulement 34 séparant la chambre 27a du passage 27b constituant la partie de moindre diamètre de l'alésage 27. Le passage 27b traverse totalement le boîtier 26 et débouche sur sa face supérieure horizontale. Il reçoit une tige coulissante 29b qui porte la tête 29a et qui a un diamètre inférieur à celui du passage 27b pour le passage du fluide. A sa partie supérieure extrême, la tige 29b a un diamètre plus grand et reçoit un joint annulaire d'étanchéité logé dans une gorge. La tige 29b émerge du boîtier 26 pour pouvoir être actionnée axialement depuis l'extérieur.

L'alésage 28 est agencé de façon analogue à l'alésage 27. La conduite 23 de liaison avec la chambre 19 débouche dans la partie 28a de plus grand diamètre de l'alésage 28. La chambre 28a ainsi formée contient le ressort 32 et la tête élargie 30a du plongeur 30. La tête 30a a un diamètre inférieur à celui de la chambre 28a, de sorte que le fluide peut circuler dans la zone annulaire définie par la tête et la paroi de la chambre. La face de la tête 30a opposée à celle qui reçoit le ressort 32 est garnie d'un joint annulaire 35 propre à venir coopérer avec l'épaulement 36 séparant la chambre 28a du passage 28b constituant la partie de moindre diamètre de l'alésage 28. Le passage 28b traverse lui aussi totalement le boîtier 26 et débouche sur sa face horizontale. Il reçoit une tige coulissante 30b qui porte la tête 30a, et qui a un diamètre inférieur à celui du passage 28b pour le passage du fluide. A sa partie supérieure extrême, la tige 30b a un diamètre plus grand et reçoit un joint annulaire d'étanchéité logé dans une gorge. La tige 30b émerge du boîtier 26 pour pouvoir être actionnée axialement depuis l'extérieur.

Le passage 28b est relié à l'atmosphère par un passage d'échappement 37. La chambre 28a est reliée au passage 27b par un passage transversal oblique 38, ménagé dans le corps du boîtier 26 et portant un clapet anti-retour 39, interdisant la circulation de fluide de la chambre 28a vers le passage 27b.

Sur la fig 3, chaque plongeur a été représenté pour moitié en position fermée et pour moitié en position ouverte.

Le distributeur 22 est commandé par un levier basculant 40 articulé sur la partie supérieure du boîtier 26 autour d'un pivot horizontal 41 équidistant des alésages 27 et 28. Au droit de ces alésages, le levier 40 porte deux doigts ou saillies respectifs de poussée 42, 43 propres à agir par poussée sur les extrémités des plongeurs 29, 30 émergeant du boîtier. Pour la position de repos (fig 1 et 3), le levier basculant 40 est en position horizontale et les plongeurs sont en position fermée, c'est-à-dire que les communications entre la chambre 27a et le passage 27b, d'une part, et entre le passage 28b et la chambre 28a, d'autre part, sont interrompues par les têtes 29a et 30a des plongeurs 29 et 30 en appui sur les épaulements 34 et 36 avec interposition des joints 33 et 35, sous l'action des ressorts 31 et 32 et de la pression régnant dans les conduites 25 et 23. Pour cette position, la chambre pneumatique 19 est donc isolée de la source 24 de fluide sous pression et de l'atmosphère; elle constitue donc une enceinte fermée comme on le voit sur les fig 1 et 3; il n'existe pas de jeu entre les doigts 42, 43 et les plongeurs 29, 30 pour cette position de repos.

Pour la position montrée à la fig 2, le plongeur 29 est en position fermée, comme sur les fig 1 et 3, sous l'effet du ressort 31 et de la pression du fluide de la source 24, tandis que le plongeur 30 est en position ouverte, enfoncé par le doigt 43 du levier basculant 40 qui agit contre l'action du ressort 32 et de la pression régnant dans la chambre pneumatique 19. Pour cette position, la chambre 19 est en communication avec le passage 28b, à travers la chambre 28a ,et donc avec l'atmosphère par le passage 37; elle est ou se met par conséquent à la pression atmosphère, généralement en se dégonflant.

Pour la troisième position du levier basculant 40, représentée en tirets sur la fig 3, le plongeur 30 est en position fermée, comme sur les fig 1 et 3, sous l'effet du ressort 32 et de la pression régnant dans la chambre 28a, tandis que le plongeur 29 est en position ouverte, enfoncé par le doigt 42 du levier 40 qui agit contre l'action du ressort 31 et de la pression régnant dans la chambre 27a. Pour cette position, la chambre 19 est alimentée en fluide sous pression à travers la chambre 27a, les passages 27b et 38, le clapet 39 monté dans le sens passant, la chambre 28a et la conduite 23; cette alimentation se produit tant que et chaque fois que, à la fois, le plongeur 29 est enfoncé et la pression dans la chambre pneumatique 19 est inférieure à la pression de la source 24.

Le levier basculant 40 est susceptible d'être actionné par le châssis mobile 2 lui-même, par des moyens décrits ci-après. Le châssis 2 porte une tige verticale 44 dirigée vers le bas. A l'extrémité inférieure de cette tige est articulée, autour d'un pivot horizontal 45, une extrémité d'une bielle 46 dont l'autre extrémité porte une broche horizontale 47, parallèle aux pivots 41 et 45, évoluant dans une fente allongée 48 pratiquée à l'extrémité libre du levier basculant 40. La fente 48 est rectiligne, de largeur égale, au jeu de coulissement près, au diamètre de la broche 47, et son grand axe est dirigé vers l'axe du pivot 41. Son rôle est, d'une part, d'absorber la variation de distance dans le temps entre les pivots 41 et 45, selon le déplacement vertical du châssis 2 et, d'autre part, de permettre à la bielle 46, et donc au châssis mobile 2, à partir de la position d'équilibre montrée à la fig 3, d'avoir un léger mouvement dans un sens ou dans l'autre sans affecter la position angulaire du levier basculant 40 commandant le distributeur 22 dès qu'il s'écarte de sa position horizontale de repos.

La bielle 46 est sollicitée en permanence à se mettre en alignement avec le pivot 41 par un ressort de traction 49 accroché sur le pivot 41 et sur la broche 47.

La position instantanée du levier basculant 40 est définie par les forces qui agissent sur lui. Mis à part les frottements dus au pivot 41 et à la coopération broche 47- fente 48, il est soumis, d'une part, à l'action de la bielle 46 qui tend à s'aligner sur le pivot 41 sous l'action du ressort 49 et, d'autre part, suivant le cas, à l'action de l'un ou l'autre des plongeurs 29, 30 sollicités axialement vers l'extérieur par leur ressort 31, 32 et la pression règnant dans la chambre 27a ou la chambre 28a.

L'ensemble est tel que, à partir de la position normale de repos en charge, pour laquelle les pivots 41,45 et la broche 45 sont alignés horizontalement, les plongeurs 29, 30 étant donc fermés et la broche 47 étant au voisinage immédiat de l'extrémité de la fente 48 voisine du pivot 41, le pivot 45, et donc le châssis mobile 2, puissent se déplacer dans un sens ou dans l'autre, sous l'effet d'une sollicitation extérieure transitoire, d'une faible distance, par exemple 20mm, sans affecter la position du levier 40, c'est-à-dire sans modifier la quantité de fluide/contenu dans la chambre pneumatique 19. Cette adaptation se fait par construction et, au mieux, par un choix judicieux de ressort 49 en tenant compte des autres paramètres du dispositif. Ainsi, toutes choses égales par ailleurs, un ressort 49 très raide donne une course morte ou neutre du châssis très faible puisque pratiquement tout déplacement du pivot 45 à partir de la position de la fig 3 entraîne un basculement du levier 40 sous l'effet du ressort 49 qui sollicite fermement la bielle 46 à s'aligner sur le pivot 41. A l inverse, un ressort 49 peu raide ne provoque un basculement du levier 40 à partir de la position de la fig 3, que pour un déplacement relativement important du châssis 2.

L'avantage déterminant résultant de l'existence de cette course morte ou neutre du châssis mobile 2 est d' éviter une commande systématique de la chambre pneumatique de suspension dès que et chaque fois que le châssis mobile 2 subit un déplacement transitoire de faible amplitude.

Le fonctionnement et l'utilisation du dispositif selon l'invention, décrit ci-dessus dans son application à la suspension d'un siège de véhicule, sont les suivants.

La position provisoire de repos à vide est montrée à la fig 2. Pour cette position, le châssis mobile 2 est en butée en position haute, sous l'effet de la chambre pneumatique 19 qui est en communication avec l'atmosphère sous la commande du levier 40 maintenu en position par la bielle 46 dont le pivot 45 est en position haute. Quand le conducteur s'asseoit, il pèse de tout son poids sur le siège et sur le châssis 2. La suspension s'enfonce, éventuellement jusqu'à la position de butée basse, car la chambre 19 ne peut instantanément surmonter l'effet de la charge appliquée. Ce faisant, le pivot descend et fait basculer le levier 40 dans le sens de l'ouverture du plongeur 29 et de la fermeture du plongeur 30. La chambre 19 est ainsi mise en communication avec la source 24 de fluide sous pression, lequel alimente la chambre, suivant un débit déterminé par les sections de passage. Cette alimentation se poursuit tant que le levier 40 est dans cette position basculée, c'est-à-dire tant que le pivot 45 est à un niveau inférieur à celui de la fig 1. Au cours de la mise en pression de la chambre 19, la force verticale ascendante exercée par celle-ci croît rapidement, d'autant que le volume de la chambre est alors relativement faible. Sous l'effet de cette mise en pression, cette force verticale vient à surmonter l'effet de la charge, le châssis mobile 2 remonte progressivement, en même temps que la chambre 19 augmente de volume. Ces mouvements se poursuivent jusqu'à ce que le châssis 2 atteigne la zone d'équilibre des fig 1 et 3, pour laquelle le levier basculant est en position horizontale.

Il est à noter que la position d'équilibre est atteinte avec une vitesse qui va en décroissant en raison de la diminution progressive des sections de passage, essentiellement entre la tête 29a et l'épaulement 34. Le siège, en remontant, ne dépasse donc pas, par inertie, la position d'équilibre, ce qui, autrement, risquerait de commander le distributeur 22 dans le sens du dégonflage de la chambre 19 et donc de provoquer une descente du siège, suivie d'une remontée, etc.. Au surplus, l'existence de la course morte ou neutre de part et d'autre de la position d'équilibre théorique des fig 1 et 3 assure que la zone d'équilibre est atteinte une seule fois, sans dépassement.

Il apparaît de ce qui précède que, grâce à l'asservissement de l'alimentation de la chambre 19 à la position verticale du châssis mobile 2, on obtient une position déquilibre, ou position neutre de repos en charge, qui est indépendante de la charge appliquée, par exemple le poids du conducteur dans l'application préférée considérée. En d'autres termes, le dispositif de suspension pneumatique selon l'invention s'adapte de lui-même à la charge sans qu'il soit nécessaire d'afficher au préalable la force qui sera exercée par celle-ci ou, selon le cas, de prérégler la suspension avant chaque usage.

En fonctionnement normal, le châssis 2 peut osciller élastiquement dans la zone d'équilibre, de part et d'autre de la position d'équilibre, sans que le distributeur 22 soit commandé dans un sens ou dans l'autre. Ces oscillations de faible amplitude sont transitoires et amorties par la chambre 19 agissant entre les châssis fixe et mobile.

Il est encore à noter que, en fonctionnement normal, la raideur de la suspension est pratiquement insensible à la charge ce qui, dans le cas d'un véhicule, donne la même sensation de confort au conducteur quel que soit sont poids.

Si un à-coup important se produit, par exemple en raison d'un cahot pour un véhicule, le châssis 1, par rapport à un repère fixe, se déplace rapidement; ce faisant, il se crée un mouvement différentiel relativement important entre les châssis, ce qui provoque la commande du distributeur 22; par exemple, si le châssis 1 descend brusquement, en raison d'une ornière, le pivot 45 monte par rapport au distributeur 22, ce qui provoque la mise à l'atmosphère temporaire de la chambre 19 par l'ouverture du plongeur 30; le châssis 2 descend avec retard et, s'il dépasse, en descendant, la zone déquilibre, la chambre est à nouveau gonflée temporairement, etc..., jusqu'à ce que la zone d'équilibre soit à nouveau atteinte sans être dépassée.

Quand le conducteur quitte son siège, c'est-à-dire quand, d'une manière générale, le châssis 2 est libéré de sa charge, la chambre 19 fait remonter le châssis 2 à vide, ce qui provoque le basculement du levier 40 dans le sens de l'ouverture du plongeur 30 pour mettre la chambre 19 à l'atmosphère; celle-ci se déploie totalement jusqu'à la position de butée haute de la fig 2, tout en ayant une pression intérieure qui décroît jusqu'à la pression atmosphérique, néanmoins suffisante pour faire supporter à la suspension le poids du siège à vide.

Bien entendu, dans le cas de l'application à la suspension d'un siège de véhicule, on pourra adjoindre au dispositif selon l'invention les moyens habituels de réglage en hauteur, schématisés en 50, de réglage longitudinal, et d'amortissement dynamique des oscillations longitudinales et ou verticales.

## REVENDICATIONS

1. Dispositif de suspension pneumatique, notamment pour siège de véhicule, avec adaptation à la charge appliquée, comportant un châssis fixe (1), un châssis mobile (2) recevant la charge appliquée, et une chambre pneumatique (19) interposée directement ou indirectement entre les deux châssis et destinée à transmettre élastiquement au châssis fixe (1) la force exercée par la charge, caractérisé par le fait qu'il comporte en outre:

- une source (24) de fluide pneumatique sous pression, notamment de l'air comprimé,

- des moyens distributeurs (22) propres, d'une part, à mettre la chambre (19) en communication pneumatique sélectivement avec la source de fluide sous pression ou avec l'atmosphère et, d'autre part, à fermer la chambre,

- un levier basculant (40) articulé sur lesdits moyens distributeurs (22) et propres à commander ceux-ci sans jeu pour mettre sélectivement la chambre (19) dans l'un des trois états fermé ou en communication avec la source (24) ou l'atmosphère,

- une bielle (46) articulée sur le châssis mobile (2) et coopérant avec le levier basculant à distance de l'articulation (41) de celle-ci sur les moyens distributeurs (22), la coopération de la bielle (46) et du levier (40) étant bilatérale et avec une course morte ou neutre permettant à la bielle (46) une légère course par rapport au levier basculant (40) sans actionner celui-ci;

- et des moyens élastiques de rappel (49) sollicitant la bielle (46) à venir en alignement avec l'articulation (41) du levier basculant sur les moyens distributeurs (22).

2. Dispositif selon la revendication 1, caractérisé par le fait que la bielle (46) et le levier basculant (40) coopèrent par un système à broche (47) et boutonnière (48) permettant une légère course morte ou neutre de la broche par rapport à la boutonnière .

3. Dispositif selon l'une des revendications 1 et 2, caractérisé par le fait que les moyens élastiques (49) sont constitués par un ressort de traction accroché sur l'articulation (41) du levier basculant (40) sur les moyens distributeurs (22) et sur la bielle (46).

4. Dispositif selon l'une des revendications 1 à 3, caractérisé par le fait que les moyens élastiques de rappel (49) sont agencés pour que la bielle (46) ne sollicite le levier basculant (40), pour la commande des moyens distributeurs (22), qu'au delà d'une zone angulaire d'équilibre.

5. Dispositif selon l'une des revendications 1 à 4, caractérisé par le fait que les moyens distributeurs (22) comportent un boîtier (23) sur lequel est articulé le levier basculant (40), et deux plongeurs (29,30), rappelés élastiquement en position fermée pour laquelle la chambre pneumatique (19) constitue une enceinte fermée de volume variable, le levier basculant (40) étant agencé pour pouvoir, sous la commande de la bielle (46), actionner l'un des plongeurs pour mettre la chambre (19) en communication pneumatique avec la source (24) ou l'atmosphère.

6. Dispositif selon l'une des revendications 1 à 5, caractérisé par le fait que le châssis mobile (2) supporte un siège de véhicule.

7.Dispositif selon la revendication 6, caractérisé par le fait que le châssis mobile (2) est cinématiquement relié au châssis fixe (1) par une liaison à ciseaux (3,4), la chambre (19) agissant entre le châssis fixe et lesdits ciseaux.

8. Dispositif selon l'une des revendications 1 à 7, caractérisé par le fait que la zone d'équilibre, dans laquelle le châssis mobile (2) peut évoluer sans actionnement des moyens distributeurs (22), correspond à la zone des mouvements transitoires de faible amplitude en fonctionnement normal.

*Fig:1*

Fig. 2

2/3

0125185

Fig.3

Office européen
des brevets

**RAPPORT DE RECHERCHE EUROPEENNE**

0125185
Numéro de la demande

EP 84 40 0919

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl ³) |
|---|---|---|---|
| A | GB-A-2 096 733 (UOP)<br>* Page 1, ligne 97 - page 2, ligne 24; figures 1-4 * | 1,5-7 | B 60 N 1/00 |
| A | FR-A-2 060 736 (UOP)<br>* Page 2, lignes 23-31; figures 1,4 * | 1,6 | |
| A | US-A-3 638 897 (HARDER et al.)<br>* Colonne 6, lignes 5-13; figures 3,4,6 * | 1,6 | |
| A | US-A-3 036 844 (VOGEL)<br>* Colonne 8, lignes 16-41; figure 6 * | 1 | |

DOMAINES TECHNIQUES RECHERCHES (Int. Cl. ³)

B 60 N 1/00
B 60 G 17/04

Le présent rapport de recherche a été établi pour toutes les revendications

| Lieu de la recherche | Date d'achèvement de la recherche | Examinateur |
|---|---|---|
| LA HAYE | 11-07-1984 | OSBORNE J. |